# EUROPEAN PATENT SPECIFICATION

(11) **EP 0 474 821 B1**
(45) Date of publication and mention of the grant of the patent: **18.10.1995**
(21) Application number: 91906680.3
(22) Date of filing: 28.03.1991
(51) Int. Cl.: H01M 6/18, H01M 6/40

(54) **A BATTERY AND A METHOD OF MANUFACTURE THEREFOR**
BATTERIE UND VERFAHREN ZU DEREN HERSTELLUNG
BATTERIE ET PROCEDE DE FABRICATION

(30) Priority: 29.03.1990 GB 9007104
(43) Date of publication of application: 18.03.1992
(73) Proprietor: Ultralife Batteries (UK) Ltd., GB-London EC2M 2SJ (GB)
(72) Inventor: JARVIS, Christine, Ruth 72 Blenheim Drive, Gloucestershire, GL20 7QQ (GB); NEAT, Robin, John, Oxford, OX3 0QP (GB)
(74) Representative: Hogg, Jeffery Keith
(86) International application number: GB9100501
(87) International publication number: WO9115035

(56) References cited:
- EP-A- 0 279 554
- Patent Abstracts of Japan, volume 13, no. 117, (E-731)(3465), 22 March 1989, & JP, A, 63289767 (HITACHI LTD.), 28 November 1988 see the abstract

## Description

### Technical Field

This invention relates to a battery and a method of manufacture therefor.

The use of certain materials in batteries, and of certain constructions of batteries can lead to problems with contamination in the battery, for example, in a battery which contains an alkali metal, such as lithium, water, either atmospheric or latent, can lead to oxidation of the alkali metal in the battery, possibly leading to malfunction or non-operation of the battery.

In an attempt to alleviate this contamination problem, generally the component materials of the battery are thoroughly dried, and subsequent manufacturing operations are performed in a dry atmosphere. The performing of the subsequent operations is very important because certain component parts of the battery are highly hydroscopic in nature and would tend to draw into them the water vapour present in the atmosphere.

As a consequence of the above, the production costs for manufacturing the battery are greatly increased.

Further, certain battery constructions do not make this possible, for example the use of volatile materials such as a mixture of propylene carbonate (PC) and ethylene carbonate (EC) in the battery, render the above mentioned production technique very difficult as the materials (PC/EC) will be driven off themselves by the drying operations.

### Disclosure of the Invention

The present invention is concerned with providing a battery, and method of manufacture therefor, in which the problems mentioned above are alleviated.

In accordance with a first aspect, the present invention consists in a method of manufacturing a battery having at least one electrochemical cell comprising forming a negative electrode, a positive electrode, and a solid electrolyte, and dispersing in the solid electrolyte a first material so that there is a concentration of zero or substantially zero of said first material in the vicinity of a second material of the battery with which it would otherwise react.

The electrolyte may be formed with a concentration gradient of said first material across it, or may be formed in two or more distinct layers having differing concentrations of the first material therein.

A method of manufacturing a battery in accordance with the present invention is particularly suited for use with batteries, such as lithium batteries, which contain volatile constituents such as propylene carbonate (PC) or ethylene carbonate (EC). This is because these volatile constituents or contaminants therein may react with another part of the battery such as lithium metal or alloy and adversely effect operation of the battery.

The method in accordance with the present invention is preferably used to manufacture batteries that operate at room temperature.

In accordance with a second aspect, the present invention consists in a battery having at least one electrochemical cell comprising a negative electrode, a positive electrode, and a solid electrolyte, the solid electrolyte having dispersed therein, a first material with a concentration of zero or substantially zero in the vicinity of a second material of the battery with which it would otherwise react.

In a preferred embodiment of the invention, the electrochemical cell comprises a negative electrode of lithium metal or metal alloy, a positive electrode of manganese dioxide (MnO₂), and a solid electrolyte of polyethylene oxide (PEO), having a mixture of propylene carbonate (PC) and ethylene carbonate (EC) and a lithium salt, such as lithium triflate (LiCF₃SO₃) dispersed therein, the mixture of propylene carbonate (PC) and ethylene carbonate (EC) being dispersed in the electrolyte so that the electrolyte in contact with the negative electrode is free from propylene carbonate (PC) and ethylene carbonate (EC) and any associated contaminants.

With this particular battery construction, the propylene carbonate (PC) and ethylene carbonate (EC) are volatile components which show a hydroscopic nature, and hence may contain a small amount of contaminant water. It is this water that needs to be isolated from the lithium to prevent oxidation of the lithium and deterioration of the operational characteristics of the battery.

Furthermore, because propylene carbonate (PC) and ethylene carbonate (EC) are both volatile, they would merely be driven off in any drying operation to get rid of water. Therefore, the addition of the propylene carbonate (PC) and ethylene carbonate (EC) subsequent to the drying operation, and the isolating of them from the lithium provides an ideal solution.

The manufacture of this preferred embodiment of the invention is preferably effected using the following steps; manufacturing in a dry atmosphere from dry materials of the separate components comprising a negative electrode a positive electrode, and solid electrolyte of polyethylene oxide (PEO) including a lithium salt, for example, lithium triflate (LiCF₃SO₃) but not containing propylene carbonate (PC) or ethylene carbonate (EC); applying to a surface of the solid electrolyte a mixture of propylene carbonate (PC) and ethylene carbonate (EC); assembling the components together so that the surface of the electrolyte coated with the propylene carbonate (PC) and ethylene carbonate (EC) is not in contact with the negative electrode, thereby to form the battery; and predischarging the battery at a temperature between 70°C and 120°C.

At normal temperature and pressure, the propylene carbonate (PC) and ethylene carbonate (EC) applied onto the surface of the solid electrolyte slowly migrates into the body of polyethylene oxide (PEO) as well as into the positive electrode. However, the rate of migration is not sufficient to cause any problems with regard to the negative electrode. Now, by predischarging the battery between 70°C and 120°C, the polyethylene oxide (PEO) is softened and more readily allows the migration of the propylene carbonate (PC) and ethylene carbonate (EC) across the polyethylene oxide (PEO) so that a substantially even distribution thereof will be attained. Simultaneously, the predischarging locks up any contaminants present in the propylene carbonate and ethylene carbonate mixture.

It will be appreciated by those skilled in the art that the invention may be used in any form of suitable electrochemical cell/battery where potentially interactive materials are present and where either it is necessary only to isolate the materials from one another prior to initial charging or discharging of the electrochemical cell/battery, as in the above example, or where it is necessary to maintain a longer period of separation.

The invention may be used in a wide range of situations and battery constructions, for example, any battery containing alkali metal in which water contamination may be a problem.

It should be noted that the thickness of electrolyte material acting to isolate the interacting materials from one another is not critical to the operation of the invention. However, when manufacturing a battery in accordance with the present invention, the thickness of the electrolyte material should be considered, and should always be sufficient to ensure that the required isolation occurs for the required duration of time. In most cases, this means the thickness may be relatively small in comparison to the thickness of the bulk of the electrolyte.

In a preferred embodiment of the present invention, the positive electrode comprises manganese dioxide (MnO₂) dispersed in a polymer material, such as that of the electrolyte.

The invention may be used with most forms of non-aqueous primary or secondary electrochemical cells.

### Description of the Drawings

The invention will now be described by way of example with reference to the accompanying drawings, in which:
- Figure 1: shows a schematic view of a battery made in accordance with the present invention;
- and Figure 2: shows a cross-section through the material of the core of the battery shown in Figure 1.

### Mode of Carrying Out the Invention

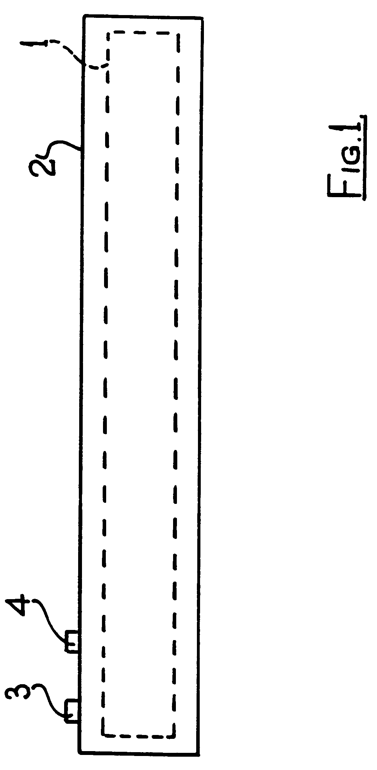

Now referring to Figure 1 of the drawings, a solid state battery made in accordance with the present invention comprises a core member 1, a casing of non-porous water resistant material 2 which completely surrounds the core member 1, a negative terminal 3 which extends through the casing 2 and enables connection of the battery to a device, and a positive terminal 4 which extends through the casing 2 and enables connection of the battery to a device.

The negative and positive terminals 3 and 4 are hermetically sealed so as to prevent the core member 1 of the battery being open to the atmosphere, and are electrically insulated from one another.

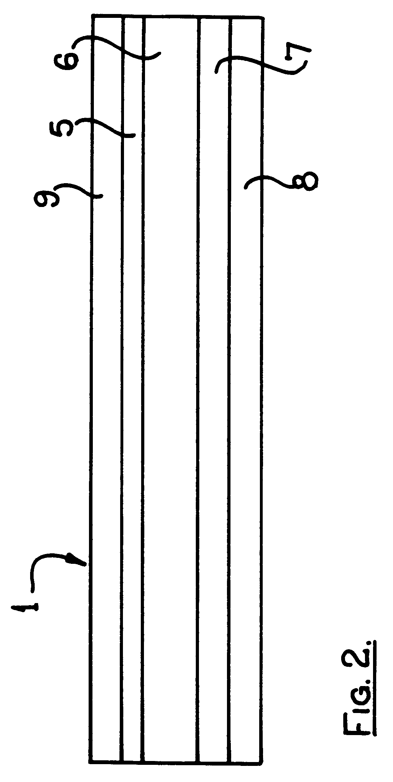

Now referring to Figure 2, the core member 1 of the battery shown assembled comprises four layers as follows.

A first layer 5 of lithium metal or a lithium alloy constitutes the negative electrode of the battery and is electrically connected to the negative terminal 3 of the battery. A second layer 6 constitutes the solid electrolyte of the battery and consists of polyethylene oxide (PEO) in which a lithium salt such as lithium triflate is dispersed, and across which extends from the first layer 5 to a third layer 7, a concentration gradient of ethylene carbonate (EC) and propylene carbonate (PC) such that in the vicinity of first layer 5 (negative electrode) the concentration of ethylene carbonate (EC) and propylene carbonate (PC) is zero or substantially zero. The third layer 7 constitutes the positive electrode of the battery and consists of manganese dioxide (MnO₂) active material dispersed in a polymeric material, for example, the solid electrolyte of the battery. A fourth layer 8 constitutes the current collector.

The above layered structure forms an electrochemical cell in the battery which provides the necessary electrochemical driving force.

The above described battery is manufactured using the following technique. The negative electrode 5, the positive electrode 7, the current collector 8 and the solid electrolyte 6 (not including the propylene carbonate (PC) and ethylene carbonate (EC) mix) are manufactured, thoroughly dried and held in a dry atmosphere. The negative electrode 5, and the solid electrolyte 6 are assembled, and the surface of the solid electrolyte 6 remote from the negative electrode 5 is applied with a mixture of propylene carbonate (PC) and ethylene carbonate (EC) of appropriate proportion in relation to the mass of electrolyte material. The positive electrode 7 and the current collector 8 are assembled with the negative electrode 5 and the solid electrolyte 6, to form a battery preform. The battery preform is now formed into the battery and is predischarged at 100°C.

## Claims

1. A method of manufacturing a battery having at least one electrochemical cell comprising forming a negative electrode, a positive electrode, and a solid electrolyte, characterised by dispersing in the solid electrolyte (6) a first material so that there is a concentration of zero or substantially zero of said material in the vicinity of a second material (5) of the electrochemical cell with which it would otherwise react.

2. A method as claimed in claim 1 in which the first material is provided as a coating on a surface of the electrolyte and migrates into the electrolyte.

3. A method as claimed in claim 2 in which the coating of said first material is applied to one surface of the electrolyte opposite a surface in contact with the negative electrode, the negative electrode being composed of said second material separated from said first material by the electrolyte.

4. A method as claimed in claim 3 in which the negative electrode is composed of a material which reacts with water and the first material is volatile and includes water as a contaminant.

5. A method as claimed in claim 4 in which the negative electrode is composed of lithium metal or lithium alloy.

6. A method as claimed in claim 4 or 5 in which the first material comprises propylene carbonate and ethylene carbonate.

7. A method as claimed in any one of the preceding claims in which the electrolyte comprises polyethylene oxide and a lithium salt.

8. A method as claimed in any one of the preceding claims in which the battery is predischarged at a temperature between 70°C and 120°C after being assembled.

9. A method as claimed in any one of the preceding claims in which the positive electrode comprises manganese dioxide dispersed in a polymer material.

10. A battery having at least one electrochemical cell comprising a negative electrode, a positive electrode, and a solid electrolyte, characterised in that the solid electrolyte has dispersed therein a first material with a concentration of zero or substantially zero in the vicinity of a second material of the battery with which it would otherwise react.

11. A battery as claimed in claim 10 in which the first material is provided as a coating on a surface of the electrolyte and migrates into the electrolyte.

12. A battery as claimed in claim 11 in which the coating of said first material is applied to one surface of the electrolyte opposite a surface in contact with the negative electrode, the negative electrode being composed of said second material separated from said first material by the electrolyte.

13. A battery as claimed in claim 12 in which the negative electrode is composed of a material which reacts with water and the first material is volatile and includes water as a contaminant.

14. A battery as claimed in claim 13 in which the negative electrode is composed of lithium metal or lithium alloy.

15. A battery as claimed in claim 13 or 14 in which the first material comprises propylene carbonate and ethylene carbonate.

16. A battery as claimed in any one of claims 10 to 15 in which the electrolyte comprises polyethylene oxide and a lithium salt.

17. A battery as claimed in any one of claims 10 to 16 in which the positive electrode comprises manganese dioxide dispersed in a polymer material.

## Patentansprüche

1. Verfahren zur Herstellung einer Batterie mit wenigstens einer elektrochemischen Zelle, umfassend die Bildung einer negativen Elekrode, einer positiven Elektrode, und eines festen Elektrolyten, gekennzeichnet durch Dispergieren eines ersten Materials in dem festen Elektrolyten (6) der Art, daß die Konzentration des ersten Materials in der Nachbarschaft eines zweiten Material (5) der elektrochemischen Zelle, mit dem es (das erste Material) sonst reagieren würde, Null oder fast Null ist.

2. Ein Verfahren nach Anspruch 1, wobei das erste Material vorgesehen ist als eine Beschichtung auf einer Oberfläche des Elektrolyten und in den Elektrolyten eindringt.

3. Verfahren nach Anspruch 2, wobei die Beschichtung des ersten Materials angewendet wird auf eine Oberfläche des Elektrolyten gegenüber der Oberfläche, die in Kontakt ist mit der negativen Elektrode, wobei die negative Elektrode gebildet ist aus dem zweiten Material, getrennt von dem ersten Material durch den Elektrolyten.

4. Ein Verfahren nach Anspruch 3, wobei die negative Elektrode zusammengesetzt ist aus einem Material, welches mit Wasser reagiert und wobei das erste Material flüchtig ist und Wasser als eine Verunreinigung enthält.

5. Ein Verfahren nach Anspruch 4, wobei die negative Elektrode aus Lithiummetall oder Lithiumlegierung besteht.

6. Ein Verfahren nach Anspruch 4 oder 5, wobei das erste Material aus Propylen-Carbonat oder Athylen-Carbonat besteht.

7. Ein Verfahren nach einem der vorhergehenden Ansprüche, wobei der Elektrolyt umfaßt bzw. besteht aus Polyäthylenoxid und einem Lithiumsalz.

8. Ein Verfahren nach einem der vorhergehenden Ansprüche, wobei die Batterie nach dem Zusammenfügen vorgeladen wird bei einer Temperatur zwischen 70°C und 120°C.

9. Ein Verfahren nach einem der vorhergehenden Ansprüche, wobei die positive Elektrode Mangandioxid, dispergiert in einem polymeren Material, enthält bzw. umfaßt.

10. Eine Batterie aus wenigstens einer elektrochemischen Zelle aus einer negativen Elektrode, einer positiven Elektrode und einem festen Elektrolyten, dadurch gekennzeichnet, daß in dem festen Elektrolyten ein erstes Material dispergiert ist mit einer Konzentration von Null oder fast Null in der Nachbarschaft eines zweiten Materials der Batterie, mit der es (das erste Material) sonst reagieren würde.

11. Eine Batterie nach Anspruch 10, wobei das erste Material vorgesehen ist als eine Beschichtung auf einer Oberfläche des Elektrolyten und in den Elektrolyten eindringt.

12. Eine Batterie nach Anspruch 11, wobei die Beschichtung des ersten Materials auf eine Oberfläche des Elektrolyten aufgebracht wird, die gegenüberliegt einer Oberfläche, die mit der negativen Elektrode in Kontakt ist, wobei die negative Elektrode aus dem zweiten Material besteht, getrennt von dem ersten Material durch den Elektrolyten.

13. Eine Batterie nach Anspruch 12, wobei die negative Elektrode aus einem Material besteht, welches mit Wasser reagiert, und das erste Material flüchtig ist und Wasser als Verunreinigung enthält.

14. Eine Batterie nach Anspruch 13, wobei die negative Elektrode aus Lithiummetall oder Lithiumlegierung besteht.

15. Eine Batterie nach Anspruch 13 oder 14, wobei das erste Material Propylen-Carbonat und Äthylen-Carbonat ist bzw. umfaßt.

16. Eine Batterie nach einem der Ansprüche 10 bis 15, wobei der Elektrolyt Polyäthylenoxid und Lithiumsalz ist.

17. Eine Batterie nach einem der Ansprüche 10 bis 16, wobei die positive Elektrode Mangandioxid, dispergiert in einem Polymermaterial, umfaßt.

## Revendications

1. Procédé de fabrication d'une batterie comportant au moins une cellule électrochimique, comprenant les opérations consistant à former une électrode négative, une électrode positive et un électrolyte solide, caractérisé par la dispersion, dans l'électrolyte solide (16), d'un premier matériau de façon qu'il y ait une concentration de zéro ou voisine de zéro du dit matériau au voisinage d'un second matériau (5) de la cellule électrochimique avec lequel autrement il réagirait.

2. Procédé selon la revendication 1, suivant lequel le premier matériau se présente comme un revêtement d'une surface de l'électrolyte, et migre dans l'électrolyte.

3. Procédé selon la revendication 2, suivant lequel le revêtement en dit premier matériau est appliqué à une surface de l'électrolyte opposée à une surface en contact avec l'électrode négative, l'électrode négative étant constituée en dit second matériau séparé du dit premier matériau par l'électrolyte.

4. Procédé selon la revendication 3, suivant lequel l'électrode négative est constituée en un matériau qui réagit avec l'eau, et le premier matériau est volatil et comprend de l'eau comme contaminant.

5. Procédé selon la revendication 4, caractérisé en ce que l'électrode négative est composée de métal de lithium ou d'alliage de lithium.

6. Procédé selon la revendication 4 ou 5, dans lequel le premier matériau comprend du carbonate de propylène et du carbonate d'éthylène.

7. Procédé selon l'une quelconque des revendications précédentes, dans lequel l'électrolyte comprend de l'oxyde de polyéthylène et un sel de lithium.

8. Procédé selon l'une quelconque des revendications précédentes, suivant lequel la batterie, après avoir été assemblée, est pré-déchargée à une température comprise entre 70°C et 120°C.

9. Procédé selon l'une quelconque des revendications précédentes, suivant lequel l'électrode positive comprend du dioxyde de manganèse dispersé dans un matériau polymère.

10. Batterie comportant au moins une cellule électrochimique, comprenant une électrode négative, une électrode positive et un électrolyte solide, caractérisée en ce qu'à l'intérieur de l'électrolyte solide est dispersé un premier matériau, à une concentration de zéro ou voisine de zéro, au voisinage d'un second matériau de la batterie avec lequel, autrement, il réagirait.

11. Batterie selon la revendication 10, dans laquelle le premier matériau se présente sous la forme d'un revêtement d'une surface de l'électrolyte et migre dans l'électrolyte.

12. Batterie selon la revendication 11, dans laquelle le revêtement en dit premier matériau est appliqué à une surface de l'électrolyte opposée à une surface en contact avec l'électrode négative, l'électrode négative étant constituée en un second matériau séparé du dit premier matériau par l'électrolyte.

13. Batterie selon la revendication 12, dans laquelle l'électrode négative est constituée en un matériau qui réagit avec l'eau, et le premier matériau est volatil et comprend de l'eau comme contaminant.

14. Batterie selon la revendication 13, dans laquelle l'électrode négative est constituée en métal de lithium ou en alliage de lithium.

15. Batterie selon la revendication 13 ou 14, dans laquelle le premier matériau comprend du carbonate de propylène ou du carbonate d'éthylène.

16. Batterie selon l'une quelconque des revendications 10 à 15, dans laquelle l'électrolyte comprend de l'oxyde de polyéthylène et un sel de lithium.

17. Batterie selon l'une quelconque des revendications 10 à 16, dans laquelle l'électrode positive comprend du dioxyde de manganèse dispersé dans un matériau polymère.
